# EUROPEAN PATENT SPECIFICATION

(11) **EP 3 730 389 B1**
(45) Date of publication and mention of the grant of the patent: **09.06.2021**
(21) Application number: 19184787.0
(22) Date of filing: 05.07.2019
(51) Int. Cl.: B62D 27/00, B62D 29/00, B62D 31/02

(54) **UPPER VEHICLE BODY OF MPV OR VAN**
OBERER FAHRZEUGAUFBAU VON MEHRZWECKFAHRZEUG ODER LIEFERWAGEN
PARTIE SUPÉRIEURE DU VÉHICULE DU MONOSPACE OU DU CAMIONNETTE

(30) Priority: 24.04.2019 CN 201910335816
(43) Date of publication of application: 28.10.2020
(73) Proprietor: Saic Motor Corporation Limited, Shanghai 200120 (CN)
(72) Inventor: MI, Cangen, Shanghai, 200438 (CN); JIN, Xiaohong, Shanghai, 200438 (CN); SUN, Weixu, Shanghai, 200438 (CN); LIU, Wei, Shanghai, 200438 (CN); PENG, Yan, Shanghai, 200438 (CN)
(74) Representative: HGF

(56) References cited:
- US-A1- 2008 169 665

## Description

### Technical field

The present invention relates to the field of automotive technology, and in particular to an upper vehicle body of an MPV or VAN.

### Background Art

Upper vehicle bodies of conventional MPVs (Multi-Purpose Vehicles) or VANs (Closed Van Type Vehicles) are manufactured from steel plates by stamping, welding, and electrophoretic coating.

This type of upper vehicle body has the following drawbacks: the body is so heavy that increasingly improved technical requirements of energy conservation and emission reduction cannot be met, and in particular lightweight requirements of new energy vehicles cannot be adapted; a risk of corrosion is high, which results in a reduced service life; and complicated manufacturing process, as well as a large number of components, results in high manufacturing costs.

Moreover, the technical features of the preamble of claim 1 are known from US 2008/0169665 A1.

In view of this, a technical problem the skilled in the art needs to solve is to develop a novel upper vehicle body which can overcome the above drawbacks and possess sufficient strength and rigidity.

### Summary of the Invention

In order to solve the above technical problems, the invention provides an upper vehicle body for an MPV or VAN, which comprises: a front end module, a front module, two front quarter modules spaced apart from each other in a left-right direction, two rear quarter modules spaced apart from each other in the left-right direction, a front windshield upper crossmember module, a front top crossmember module, a support crossmember module, a rear top crossmember module, and a back module, all of the modules being formed by aluminum alloy stamped sheets and aluminum alloy extruded profiles with cavities in combination, and being shaped separately and independently;
wherein the front end module is screwed to the front quarter module, the front module is riveted and welded to the front quarter module, the front quarter module is MIG welded to the rear quarter module, the front windshield upper crossmember module is screwed to the front quarter module, the front top crossmember module is screwed to the front quarter module and to the rear quarter module, the support crossmember module is screwed to the front quarter module and to the rear quarter module, the rear top crossmember module is screwed to the rear quarter module, and the back module is glued to the rear quarter module with structural glue and riveted to the rear quarter module.

As configured above, the upper vehicle body is modularized. When manufacturing, the modules are produced separately and then assembled together, achieving a technical effect of modular production and assembly. Compared to a conventional upper vehicle body, this reduces site requirements of workshops, large manufacturing equipment is not needed, and production investment costs can be saved by nearly 40%.

Moreover, the fact that all the modules of the upper vehicle body are formed by aluminum alloy extruded profiles with cavities and aluminum alloy stamped sheets in combination and that different connection methods are adopted appropriately for different modules of the upper vehicle body provides the upper vehicle body with sufficient rigidity. Moreover, the upper vehicle body entirely made of aluminum alloy material is lighter in total weight (20%-30% off with an equivalent volume), composed of fewer parts, and easier to shape and assemble, relative to the conventional upper vehicle body.

In the upper vehicle body described as above, the front end module is provided at its rear side with two first connecting sills which are spaced apart from each other in the left-right direction, the first connecting sill being an aluminum alloy extruded profile with a cavity; the front quarter module is provided at its front side with a second connecting sill, the second connecting sill being an aluminum alloy extruded profile with a cavity; and a sidewall of the first connecting sill is screwed to a sidewall of the corresponding second connecting sill.

With this configuration, the front end module and the front quarter module are connected together reliably.

In the upper vehicle body described as above, the front module comprises a front panel, a side panel, and an angular connecting plate, which are all aluminum alloy stamped sheets; and the front quarter module comprises an A-pillar, a front quarter lower sill, and a connecting sill connecting a lower end of the A-pillar and a front end of the front quarter lower sill, the A-pillar comprising an A-pillar main sill, and both a main body of the connecting sill and the A-pillar main sill being provided as an aluminum alloy extruded profiles with a cavity;
wherein the side panel is connected at its front side to a left or right side of the front panel, and welded at its rear side to a sidewall of the corresponding A-pillar main sill; and the angular connecting plate has a plate surface which is connected to the left or right side of the front panel and another plate surface which is riveted to a sidewall of the main body of the corresponding connecting sill.

With this configuration, the front module and the front quarter module can be connected together reliably.

In the upper vehicle body described as above, the front quarter module comprises a B-pillar, and the B-pillar comprises a B-pillar main sill, wherein the B-pillar main sill is an aluminum alloy extruded profile with a cavity, and has a front sidewall, a rear sidewall, an inner sidewall and an outer sidewall, which four sidewalls together defining the enclosed cavity, and a support wall is further provided which is connected between the front sidewall and the rear sidewall; wherein the rear quarter module comprises a rear quarter front sill, the rear quarter front sill being an aluminum alloy extruded profile with a cavity and having a front sidewall, a rear sidewall, an inner sidewall and an outer sidewall, which four sidewalls together defining the enclosed cavity; and
wherein the front sidewall of the rear quarter front sill is fitted to the rear sidewall of the B-pillar main sill, a joint of the front sidewall and the inner sidewall of the rear quarter front sill is MIG welded to the rear sidewall of the B-pillar main sill, and a joint of the rear sidewall and the outer sidewall of the B-pillar main sill is MIG welded to the front sidewall of the rear quarter front sill.

With this configuration, the rear quarter module and the front quarter module are connected together reliably, and the B-pillar main sill possesses higher strength and rigidity.

In the upper vehicle body described as above, the B-pillar further comprises a B-pillar front sill disposed in front of the B-pillar main sill, the B-pillar front sill is an aluminum alloy extruded profile with a cavity, and has a front sidewall, a rear sidewall, an inner sidewall and an outer sidewall, which four sidewalls together defining the enclosed cavity, and the B-pillar front sill further comprises a wing extending forward along the outer sidewall;
wherein the B-pillar further comprises a B-pillar outer panel and a B-pillar inner panel, both of which are aluminum alloy stamped sheets; the B-pillar outer panel is an angular plate, and comprises a plate surface which is welded to the outer sidewall of the B-pillar front sill and another plate surface which is welded to the front sidewall of the B-pillar main sill; and the B-pillar inner panel is welded at its front side to the inner sidewall of the B-pillar front sill, and welded at its rear side to the inner sidewall of the B-pillar main sill.

With this configuration, the B-pillar possesses higher strength and rigidity, and thus the upper vehicle body as a whole possesses higher strength and rigidity.

In the upper vehicle body described as above, an upper end of the B-pillar is bent inward to form a joint; the rear quarter module comprises a rear quarter upper sill; and the front top crossmember module comprises a front crossbeam and two first support sills, two ends of the front crossbeam being screwed to the corresponding joints respectively, and the first support sill being welded at one end to one end of the front crossbeam and screwed at the other end to a front end of the corresponding rear quarter upper sill.

With this configuration, the front top crossmember module is connected with the two front quarter modules and with the two rear quarter modules reliably, so that the upper vehicle body has a top with higher strength and rigidity.

In the upper vehicle body described as above, the rear quarter module comprises a rear quarter rear sill; and the rear top crossmember module comprises a rear crossbeam and two second support sills, two ends of the rear crossbeam being screwed to rear ends of the corresponding rear quarter upper sills, respectively, and the second support sill being welded at one end to one end of the rear crossbeam and screwed at the other end to an upper end of the corresponding rear quarter rear sill.

With this configuration, the rear top crossmember module is connected between the two rear quarter modules reliably, so as to further improve the strength and rigidity of the top of the upper vehicle body.

In the upper vehicle body described as above, the rear quarter rear sill has a front sidewall, a rear sidewall, an inner sidewall and an outer sidewall, which four sidewalls together defining the enclosed cavity, and the rear quarter rear sill further comprises a first wing extending inward along the rear sidewall and a second wing extending rearward along the outer sidewall;
wherein the back module comprises two D-pillars which are spaced apart from each other in the left-right direction, the D-pillar comprises a D-pillar outer angular plate, and the D-pillar outer angular plate is an aluminum alloy stamped sheet and comprises a plate surface which is glued and riveted to the rear sidewall of the rear quarter rear sill and the first wing;
wherein the D-pillar further comprises a D-pillar main sill; and the D-pillar main sill is an aluminum alloy extruded profile with a cavity, and has a front sidewall, a rear sidewall, an inner sidewall and an outer sidewall, which four sidewalls together defining the enclosed cavity, an inner side portion of the front sidewall being bent rearward; and
wherein the D-pillar further comprises a D-pillar inner angular plate, and the D-pillar inner angular plate is an aluminum alloy stamped sheet, and comprises a plate surface which is welded to the front sidewall at its inner side and another plate surface which is welded to another plate surface of the D-pillar outer angular plate.

With this configuration, the back module is connected with the rear quarter modules reliably, and the D-pillar possesses higher strength and rigidity.

In the upper vehicle body described as above, the front quarter module comprises an A-pillar top side sill and the A-pillar top side sill comprises a top side sill main body; the top side sill main body is an aluminum alloy extruded profile with a cavity, and has a first sidewall of the top side sill and a second sidewall of the top side sill that cooperate with an outer trim panel of the A-pillar, a third sidewall of the top side sill that cooperates with a front windshield, a fourth sidewall of the top side sill that cooperates with an inner trim plate of the A-pillar, and a fifth sidewall of the top side sill and a sixth sidewall of the top side sill which cooperate with a stop BRLINE, the six sidewalls together defining the enclosed cavity; there is also an upper side sill wing provided at a joint of the second sidewall of the top side sill and the third sidewall of the top side sill; and there is also a Y-shaped support wall, three wall surfaces of the Y-shaped support wall being connected with the third sidewall of the top side sill, the fifth sidewall of the top side sill and the sixth sidewall of the top side sill, respectively;
wherein the A-pillar top side sill further comprises a first angular plate of the upper sill and a second angular plate of the upper sill, both of which are aluminum alloy stamped sheets; the first angular plate of the upper sill comprises a plate surface which is welded to the fifth sidewall of the top side sill, the second angular plate of the upper sill comprises a plate surface which is welded to the sixth sidewall of the top side sill, and another plate surface of the first angular plate of the upper sill and another plate surface of the second angular plate of the upper sill are welded together.

With this configuration, the front quarter crossmemeber possesses higher strength and rigidity, and thus the upper vehicle body as a whole possesses higher strength and rigidity.

In the upper vehicle body described as above, the front windshield upper crossmember module is an aluminum alloy extruded profile with a cavity, and has an upper sidewall, a lower sidewall, an inner sidewall and an outer sidewall, which four sidewalls together defining the enclosed cavity, wherein the upper sidewall is formed with, in sequence along an inner-outer direction, a first wall surface that cooperates with a front top light and a second wall surface that cooperates with an outer panel of a front top cover, an outer side portion of the first wall surface being bent outward and upward, wherein there is also a support wall connected between the lower sidewall and the bending position of the first wall surface, and wherein there is also a wing connected to the outer sidewall.

With this configuration, the front windshield upper crossmember module possesses higher strength and rigidity, and thus the upper vehicle body as a whole possesses higher strength and rigidity.

In the upper vehicle body described as above, the rear quarter upper sill is an aluminum alloy extruded profile with a cavity, and has an upper sidewall a lower sidewall an inner sidewall and an outer sidewall, which four sidewalls together defining an enclosed cavity, wherein the upper sidewall is formed with, in sequence along the inner-outer direction, with a third wall surface that cooperates with an outer panel of a rear top cover, a fourth wall surface that cooperates with a CAS molding surface, and a fifth wall surface that cooperates with the rear quarter outer panel, an outer side portion of the third wall surface being bent outward and upward and an inner side portion of the fifth wall surface being bent inward and upward, wherein a wing is provided which extends inward along the lower sidewall and wherein a support wall is provided which is connected between the lower sidewall and the fourth wall surface.

With this configuration, the rear quarter upper sill possesses higher strength and rigidity, and thus the upper vehicle body as a whole possesses higher strength and rigidity.

In the upper vehicle body described as above, the front module comprises a front upper crossmember, and the front upper crossmember has an upper sidewall, a lower sidewall, a front sidewall and a rear sidewall, which four sidewalls together defining an enclosed cavity, an upper side portion of the rear sidewall being bent forward, wherein there is also a support wall provided between the front sidewall and a lower side portion of the rear sidewall.

With this configuration, the front upper crossmember possesses higher strength and rigidity, and thus the upper vehicle body as a whole possesses higher strength and rigidity.

### Brief Description of the Drawings

FIG.1 is a modular schematic view of a specific embodiment of an upper vehicle body provided in the present invention;
FIG. 2 is a schematic view showing that a front end module and a front quarter module are screwed to each other in the specific embodiment;
FIG. 3 is a schematic view showing a riveting position of a front module to the front quarter module in the specific embodiment;
FIG. 4 is a cross-sectional view showing a welding position of the front module to the front quarter module in the specific embodiment;
FIG. 5 is a cross-sectional view showing a welding position of the front quarter module to a rear quarter module in the specific embodiment;
FIG. 6 is a cross-sectional view showing a connecting position of a back module with the rear quarter module in the specific embodiment;
FIG. 7 is a structural perspective view showing connection positions of a front top crossmember module with the front quarter module and the rear quarter module in the specific embodiment;
FIG. 8 is a schematic cross-sectional view of an A-pillar top side sill in the specific embodiment;
FIG. 9 is a schematic cross-sectional view of a front windshield upper crossmember module;
FIG. 10 is a schematic cross-sectional view of a rear quarter upper sill in the specific embodiment; and
FIG. 11 is a schematic cross-sectional view of a front upper crossmember in the specific embodiment.

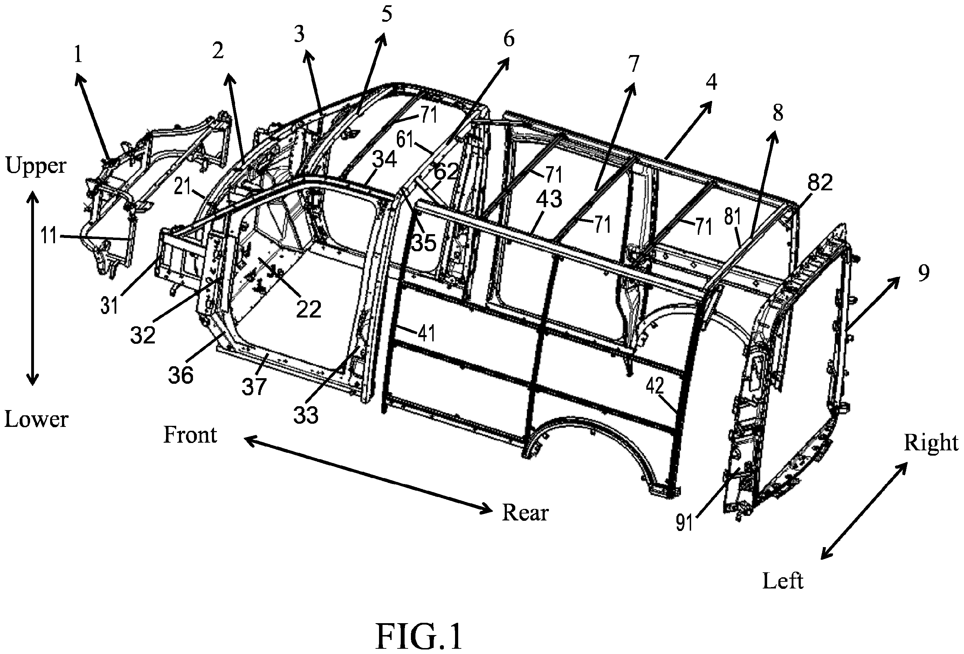

Reference signs in FIGS. 1 to 11 are listed as follows:
1 front end module, 11 first connecting sill;
2 front module, 21 front upper crossmember, 22 front panel, 23 side panel, 24 angular connecting plate;
3 front quarter module, 31 second connecting sill, 32 A-pillar, 321 A-pillar main sill, 33 B-pillar, 331 B-pillar main sill, 332 B-pillar front sill, 333 B-pillar outer panel, 334 B-pillar inner panel, 34 A-pillar top side sill, 341 top side sill main body, 341a first sidewall of top side sill, 341b second sidewall of top side sill, 341c third sidewall of top side sill, 341d fourth sidewall of top side sill, 341e fifth sidewall of top side sill, 341f sixth sidewall of top side sill, 342 first angular plate of upper sill, 343 second angular plate of upper sill, 35 joint, 36 connecting sill, 37 front quarter lower sill;
4 rear quarter module, 41 rear quarter front sill, 42 rear quarter rear sill, 421 first wing, 422 second wing, 43 rear quarter upper sill, 43a upper sidewall of rear quarter upper sill, a3 third wall surface, a4 fourth wall surface, a5 fifth wall surface, 43b lower sidewall of rear quarter upper sill, 43c outer sidewall of rear quarter upper sill, 43d inner sidewall of rear quarter upper sill;
5 front windshield upper crossmember module, 5a upper sidewall of front windshield upper crossmember module, a1 first wall surface, a2 second wall surface, 5b lower sidewall of front windshield upper crossmember module, 5c inner sidewall of front windshield upper crossmember module, 5d outer sidewall of front windshield upper crossmember module;
6 front top crossmember module, 61 front crossmember, 62 first support sill;
7 support crossmember module, 71 support crossmember;
8 rear top crossmember module, 81 rear crossmember, 82 second support sill;
9 back module, 91 D-pillar, 911 D-pillar outer angular plate, 912 D-pillar main sill, 913 D-pillar inner angular plate.

### Detailed Description of Preferred Embodiments

In order to be better understood by those skilled in the art, the technical solutions of the present invention will be further described in detail below with reference to the accompanying drawings and the specific embodiments.

First of all, it should be noted that an upper side of a component in the context refers to a side of the component close to a roof of a vehicle; a lower side of a component refers to a side of the component close to wheels of the vehicle; a left side of a component refers to a side of the component close to a left side of a width of the vehicle; a right side of a component refers to a side of the component close to a right side of the width of the vehicle; a front side of a component refers to a side of the component close to a head of the vehicle; a rear side of a component refers to a side of the component close to a tail of the vehicle; an inner side of a component refers to a side of the component close to a cabin of the vehicle; an outer side of a component refers to a side of the component close to an outer trim panel of the vehicle. It should also be noted that a cavity or chamber of a certain shape in the context means a cross section of the cavity or chamber is of the certain shape. It should also be noted that a cross section of a component mentioned in the context refers to a section perpendicular to a direction (a longitudinal direction) along which it extends.

Reference is made to FIG. 1, and FIG.1 is a modular schematic view of a specific embodiment of an upper vehicle body provided in the present invention.

As shown, the upper vehicle body is suitable for an MPV or VAN. The upper vehicle body comprises a front end module 1, a front module 2, two front quarter modules 3 spaced apart from each other in a left-right direction, two rear quarter modules 4 spaced apart from each other in the left-right direction, a front windshield upper crossmember module 5, a front top crossmember module 6, a support crossmember module 7, a rear top crossmember module 8, and a back module 9. All of the modules are formed by aluminum alloy extruded profiles with cavities and aluminum alloy stamped sheets in combination, and are shaped separately and independently.

The front end module 1 is screwed to the front quarter module 3. The front module 2 is riveted and welded to the front quarter module 3. The front quarter module 3 is MIG welded to the rear quarter module 4. The front windshield upper crossmember module 5 is screwed to the front quarter module 3. The front top crossmember module 6 is screwed to the front quarter module 3 and to the rear quarter module 4. The support crossmember module 7 comprises a plurality of support crossmembers 71 (four crossmembers are shown in the drawings), some of which are connected between and screwed to the two front quarter modules 3 and others are connected between and screwed to the two rear quarter modules 4. It should be noted that the number of support crossmembers 71 can be chosen flexibly according to actual needs. The rear top crossmember module 8 is screwed to the rear quarter modules 4. The back module 9 is glued and riveted to the rear quarter modules 4.

As configured above, the upper vehicle body is modularized. When manufacturing, the modules are produced separately and then assembled together, achieving a technical effect of modular production and assembly. Compared to a conventional upper vehicle body, this reduces site requirements of workshops, large manufacturing equipment is not needed, and production investment costs can be saved by nearly 40%.

Moreover, the fact that all the modules of the upper vehicle body are formed by aluminum alloy extruded profiles with cavities and aluminum alloy stamped sheets in combination and that different connection methods are adopted appropriately for different modules of the upper vehicle body provides the upper vehicle body with sufficient rigidity. Moreover, the upper vehicle body entirely made of aluminum alloy material is lighter in total weight (20%-30% off with an equivalent volume), easier to shape, and composed of fewer parts, relative to the conventional upper vehicle body.

In the invention, connecting structures between different modules and a cross-sectional shape of key components of the upper vehicle body (a B-pillar 33, an A-pillar top side sill 34, the front windshield upper crossmember module 5, a rear quarter upper sill 43, a front upper crossmember 21, a D-pillar 91) are also designed, so that the upper vehicle body entirely made of aluminum alloy material possesses higher strength and rigidity. The connecting structures between the different modules and the cross-sectional shape of the key components will be described in detail below.

### I. Connecting Structure of Front End Module 1 with Front Quarter Module 3

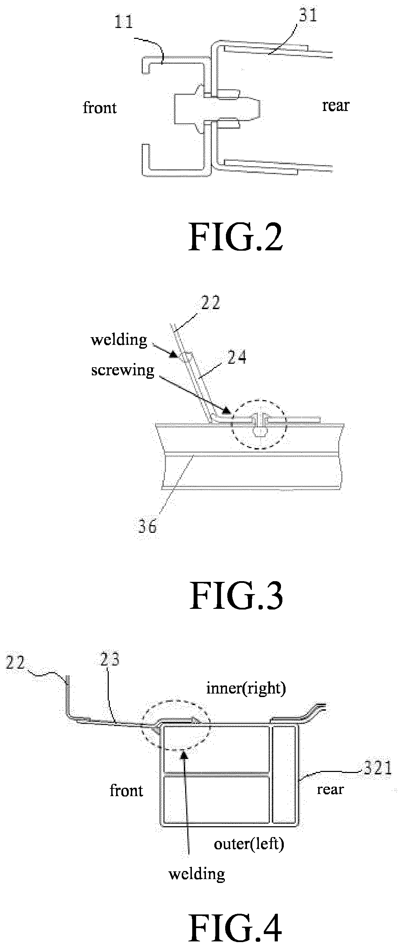

Reference is made to FIG. 1 and FIG. 2, and FIG. 2 is a schematic view showing that the front end module and the front quarter module are screwed to each other in the specific embodiment.

As shown in FIG. 1, the front end module 1 is provided at its rear side with two first connecting sills 11 which are spaced apart from each other in the left-right direction.

As shown in FIG. 2, the first connecting sill 11 is an aluminum alloy extruded profile with a cavity, and has a front sidewall, a rear sidewall, a left sidewall and a right sidewall, which four sidewalls together defining the enclosed cavity. The first connecting sill 11 is provided with a first through-hole extending through the front sidewall and the rear sidewall.

As shown in FIG. 1, the two front quarter modules 3 both are provided at their front side with second connecting sills 31, and the two second connecting sills 31 are located at a rear side of the two first connecting sills 11, respectively.

As shown in FIG. 2, the second connecting sill 31 is an aluminum alloy extruded profile with a cavity, and has a front sidewall, a rear sidewall (not shown), a left sidewall and a right sidewall, which four sidewalls together defining the enclosed cavity. The second connecting sill 31 is provided with a second through-hole extending through the front sidewall.

As shown in FIG. 2, with the rear sidewalls of the two first connecting sills 11 being fitted to the front sidewalls of the second connecting sills 31 behind the first connecting sills 11, respectively, and with the first through-hole being aligned with the second through-hole, a bolt is inserted through the first through-hole and the second through-hole with its threaded end which is then screwed to a nut. In this way, the rear sidewalls of the first connecting sills 11 and the front sidewalls of the second connecting sills 31 are pressed against each other between a head of the bolt and the nut, and thus the front end module 1 and the two front quarter modules 3 are connected together.

### II. Connecting Structure of Front Module 2 with Front Quarter Module 3

Reference is made to FIG. 1 and FIG. 3, and FIG. 3 is a schematic view showing a riveting position of the front module to the front quarter module in the specific embodiment.

As shown in FIG. 1, the front quarter module 3 comprises an A-pillar 32, a front quarter lower sill 37, and a connecting sill 36 connecting a lower end of the A-pillar 32 and a front end of the front quarter lower sill 37. In general, the connecting sill 36 is inclined generally from its upper front end to its low rear end. As shown in FIG. 3, a main body of the connecting sill 36 is constructed as an aluminum alloy extruded profile with a cavity.

As shown in FIG. 1 and FIG. 3, the front module 2 comprises a front panel 22 and angular connecting plates 24 which are connected to the front panel 22 at left and right sides of the front panel 22. The front panel 22 and the angular connecting plates 24 all are provided as aluminum alloy stamped sheets. The angular connecting plate 24 has a plate surface which is welded to the left or right side of the front panel 22 and another plate surface which is riveted to an inner sidewall of the main body of the corresponding connecting sill 36.

Reference is made to FIG. 4, and FIG. 4 is a schematic view showing a welding position of the front module 2 to the front quarter module 3 in the specific embodiment.

As shown in FIG. 4, the A-pillar comprises an A-pillar main sill 321, and the A-pillar main sill 321 is an aluminum alloy extruded profile with a cavity. In FIG. 4, the A-pillar main sill 321 has a front sidewall, a rear sidewall, an inner sidewall and an outer sidewall, the four sidewalls together defining the enclosed square cavity. The A-pillar main sill 321 comprises a T-shaped support wall, the T-shaped support wall comprising a first plate surface which is connected between the inner sidewall and the outer sidewall of the A-pillar main sill 321 and a second plate surface which is connected between the first plate surface and the front sidewall of the A-pillar main sill 321.

As shown in FIG. 4, the front module 2 further comprises two side panels 23, both of which are aluminum alloy stamped sheets. The two side panels 23 are connected at their front side to left and right sides of the front panel 22, respectively, and the two side panels 23 are welded at their rear side to the front sidewall and the inner sidewall of the corresponding A-pillar main sill 321.

### III. Connecting Structure of Front Quarter Module 3 with Rear Quarter Module 4 and Cross Section of B-pillar 33

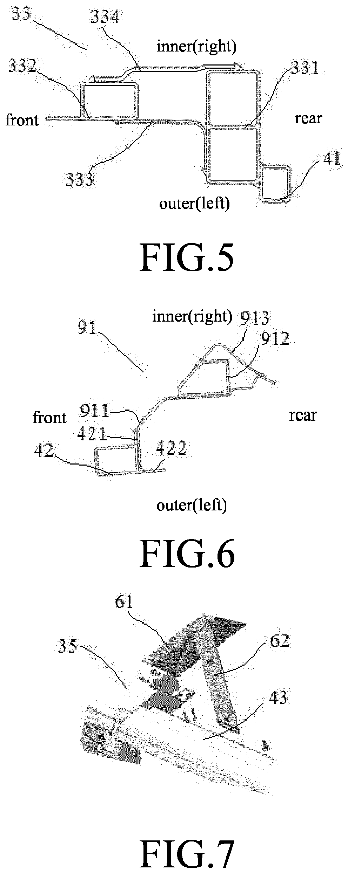

Reference is made to FIG. 1 and FIG. 5, and FIG. 5 is a cross-sectional view showing a welding position of the front quarter module to the rear quarter module in the specific embodiment. As shown in FIG. 1, the front quarter module 3 comprises the B-pillar 33.

As shown in FIG. 5, the B-pillar comprises a B-pillar main sill 331, a B-pillar front sill 332 disposed in front of the B-pillar main sill 331, a B-pillar outer panel 333, and a B-pillar inner panel 334.

The B-pillar main sill 331 is an aluminum alloy extruded profile with a cavity, and has a front sidewall, a rear sidewall, an inner sidewall and an outer sidewall, which four sidewalls together defining the enclosed square cavity. The B-pillar main sill 331 further comprises a support wall connected between the front sidewall and the rear sidewall, dividing the square cavity into two chambers of substantially the same size.

The B-pillar front sill 332 is an aluminum alloy extruded profile with a cavity, and has a front sidewall, a rear sidewall, an inner sidewall and an outer sidewall, which four sidewalls together defining the enclosed square cavity. The B-pillar front sill 332 further comprises a wing extending forward along the outer sidewall.

The B-pillar inner panel 334 is welded at its front side to the inner sidewall of the B-pillar front sill 332, and welded at its rear side to the inner sidewall of the B-pillar main sill 331.

The B-pillar outer panel 333 is an aluminum alloy stamped sheet. Moreover, the B-pillar outer panel 333 is an angular plate, and comprises a first plate surface which is welded to the outer sidewall of the B-pillar front sill 332, and another plate surface which is welded to the front sidewall of the B-pillar main sill 331, providing the B-pillar 33 with a general angular cross-section.

As shown in FIG. 1, the rear quarter module 4 comprises a rear quarter front sill 41.

As shown in FIG. 5, the rear quarter front sill 41 is an aluminum alloy extruded profile with a cavity. In FIG. 5, the rear quarter front sill 41 has a front sidewall, a rear sidewall, an inner sidewall and an outer sidewall, which four sidewalls together defining the enclosed square cavity. In FIG. 5, the rear quarter front sill 41 is provided at the outer sidewall with two dents caving into the cavity.

As shown in FIG. 5, the front sidewall of the rear quarter front sill 41 is fitted to the rear sidewall of the B-pillar main sill 331, a joint of the front sidewall and the inner sidewall of the rear quarter front sill 41 is MIG welded to the rear sidewall of the B-pillar main sill 331, and a joint of the rear sidewall and the outer sidewall of the B-pillar main sill 331 is MIG welded to the front sidewall of the rear quarter front sill 41.

### IV. Connecting Structure of Back Module 9 with Rear Quarter Module 4 and Cross Section of D-pillar 91

Reference is made to FIG. 1 and FIG. 6, and FIG. 6 is a cross-sectional view showing a connecting position of the back module with the rear quarter module in the specific embodiment.

As shown in FIG. 1, the rear quarter module 4 comprises a rear quarter rear sill 42.

As shown in FIG. 6, the rear quarter rear sill 42 is an aluminum alloy extruded profile with a cavity. In FIG. 6, the rear quarter rear sill 42 has a front sidewall, a rear sidewall, an inner sidewall and an outer sidewall, which four sidewalls together defining the enclosed cavity, and the rear quarter rear sill 42 further comprises a first wing 421 extending inward along the rear sidewall and a second wing 422 extending rearward along the outer sidewall.

As shown in FIG. 1, the back module 9 comprises two D-pillars 91 which are spaced apart from each other in the left-right direction.

As shown in FIG. 6, the D-pillar comprises a D-pillar outer angular plate 911, a D-pillar main sill 912, and a D-pillar inner angular plate 913.

The D-pillar outer angular plate 911 is an aluminum alloy stamped sheet, and comprises a plate surface which is glued and riveted to the rear sidewall of the rear quarter rear sill 42 and the first wing 421.

The D-pillar main sill 912 is an aluminum alloy extruded profile with a cavity. In FIG. 6, the D-pillar main sill 912 has a front sidewall, a rear sidewall, an inner sidewall and an outer sidewall, an inner side portion of the front sidewall is inclined rearward so that the four sidewalls together define a space having an enclosed square cross section with an inner front corner being chamfered.

The D-pillar inner angular plate 913 is an aluminum alloy stamped sheet. Moreover, the D-pillar inner angular plate 913 comprises a plate surface which is welded to the front sidewall of the D-pillar main sill 912 at an inner side of the D-pillar main sill 912 and another plate surface which is welded to another plate surface of the D-pillar 91 outer plate.

### V. Connecting Structures of Front Top Crossmember Module 6 with Front Quarter Module 3 and Rear Quarter Module 4

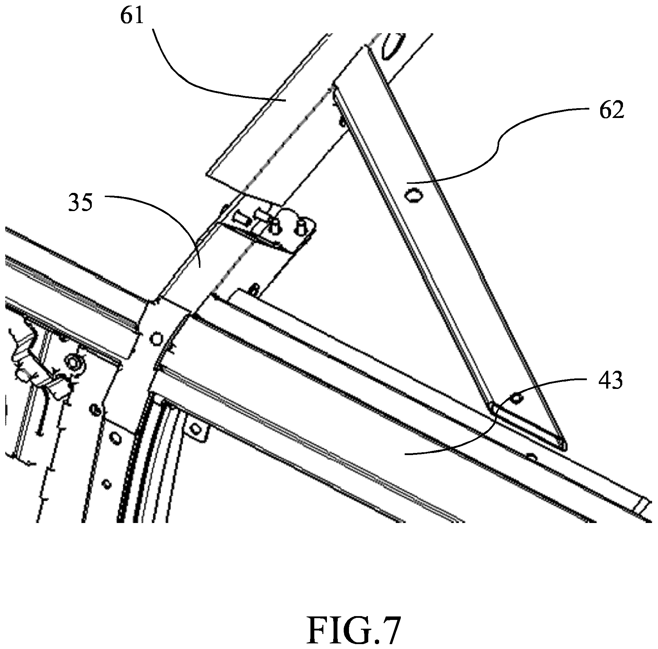

Reference is made to FIG. 1 and FIG. 7, and FIG. 7 is a structural perspective view showing connection positions of the front top crossmember module with the front quarter module and the rear quarter module in the specific embodiment.

As shown in FIG. 1 and FIG. 7, an upper end of the B-pillar 33 is inclined inward to form a joint 35. The rear quarter module 4 comprises the rear quarter upper sill 43.

As shown in FIG. 1 and FIG. 7, the front top crossmember module 6 comprises a front crossbeam 61 and two first support sills 62, left and right ends of the front crossbeam 61 being screwed to the corresponding joints 35, respectively. One of the first support sills 62 is welded at its one end to the left end of the front crossbeam 61, the other first support sill 62 is welded at its one end to the right end of the front crossbeam 61, and each of the two first support sills 62 is screwed at the other end to a front end of the corresponding rear quarter upper sill 43.

### VI. Connecting Structure of Rear Top Crossmember Module 8 with Rear Quarter Module 4

As shown in FIG. 1, the rear quarter module 4 comprises the rear quarter rear sill 42. The rear top crossmember module 8 comprises a rear crossbeam 81 and two second support sills 82. Left and right ends of the rear crossbeam 81 are screwed to rear ends of the corresponding rear quarter upper sills 43, respectively. The two second support sills 82 are welded at one end to the left or right end of the rear crossbeam 81 and screwed at the other end to an upper end of the corresponding rear quarter rear sill 42.

### VII. Cross Section of A-pillar Top Side Sill 34

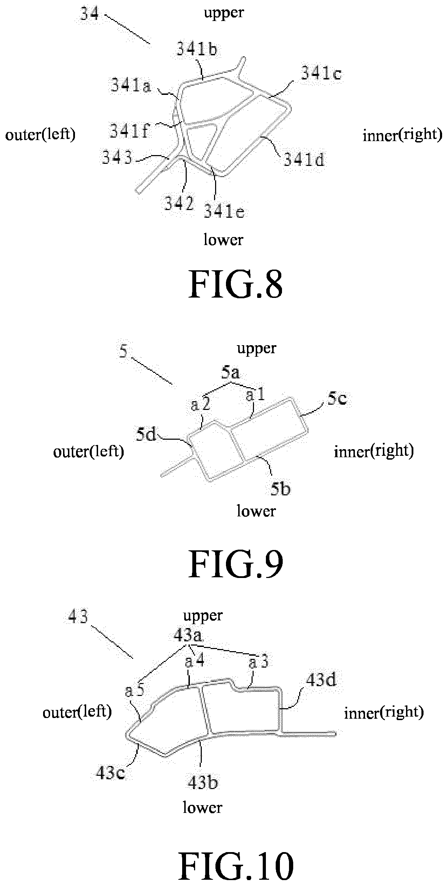

Reference is made to FIG. 8, and FIG. 8 is a schematic cross-sectional view of the A-pillar top side sill in the specific embodiment.

As shown in FIG. 1, the front quarter module 3 comprises the A-pillar top side sill 34.

As shown in FIG. 8, the A-pillar top side sill 34 comprises a top side sill main body 341, a first angular plate 342 of the upper sill, and a second angular plate 343 of the upper sill.

The top side sill main body 341 is an aluminum alloy extruded profile with a cavity. In FIG. 8, the top side sill main body 341 has a first sidewall 341a of the top side sill and a second sidewall 341b of the top side sill that cooperate with an outer trim panel of the A-pillar, a third sidewall 341c of the top side sill that cooperates with a front windshield, a fourth sidewall 341d of the top side sill that cooperates with an inner trim plate of the A-pillar, and a fifth sidewall 341e of the top side sill and a sixth sidewall 341f of the top side sill which cooperate with a stop BRLINE, the six sidewalls together defining the enclosed hexagonal cavity. There is also an upper side sill wing provided at a joint of the second sidewall 341b of the top side sill and the third sidewall 341c of the top side sill. There is also a Y-shaped support wall, three wall surfaces of the Y-shaped support wall being connected with the third sidewall 341c of the top side sill, the fifth sidewall 341e of the top side sill and the sixth sidewall 341f of the top side sill, respectively, dividing the hexagonal cavity into three separate chambers.

The first angular plate 342 of the upper sill and the second angular plate 343 of upper sill are all aluminum alloy stamped sheets, a plate surface of the first angular plate 342 of the upper sill is connected to the fifth sidewall 341e of the top side sill, a plate surface of the second angular plate 343 of the upper sill is connected to the sixth sidewall 341f of the top side sill, and the other plate surface of the first angular plate of the upper sill and the other plate surface of the second angular plate of the upper sill are welded together.

### VIII. Cross Section of Front Windshield Upper Crossmember Module 5

Reference is made to FIG. 9, and FIG. 9 is a schematic cross-sectional view of the front windshield upper crossmember module 5.

As shown in FIG. 9, the front windshield upper crossmember module 5 is an aluminum alloy extruded profile with a cavity. In FIG. 9, the front windshield upper crossmember module 5 has an upper sidewall 5a and a lower sidewall 5b which are inclined from their inner upper end to their outer lower end, and an inner sidewall 5c and an outer sidewall 5d which are inclined from their outer upper end to their inner lower end. Moreover, the upper sidewall 5a is formed with, in sequence along an inner-outer direction, a first wall surface a1 that cooperates with a front top light and a second wall surface a2 that cooperates with an outer panel of a front top cover, an outer side portion of the first wall surface a1 being bent outward and upward so that the four sidewalls together define the cavity having an enclosed rectangular cross section with its inner upper side recessed. There is also a support wall provided and connected between the lower sidewall 5b and the bending position of the first wall surface a1, dividing the rectangular cavity into a first chamber located at an upper inner side and a second chamber located at a lower outer side. There is also a wing provided at the outer sidewall 5d, and the wing is substantially perpendicular to the outer sidewall 5d.

### IX. Cross Section of Rear Quarter Upper Sill 43

Reference is made to FIG. 10, and FIG. 10 is a schematic cross-sectional view of the rear quarter upper sill in the specific embodiment.

As shown in FIG. 10, the rear quarter upper sill 43 has an upper sidewall 43a, a lower sidewall 43b, an inner sidewall 43d and an outer sidewall 43c, which four sidewalls together defining an enclosed fan-shaped cavity. The upper sidewall 43a is formed with, in sequence along the inner-outer direction, with a third wall surface a3 that cooperates with an outer panel of a rear top cover, a fourth wall surface a4 that cooperates with a CAS molding surface, and a fifth wall surface a5 that cooperates with the rear quarter outer panel, wherein an outer side portion of the third wall surface a3 is bent outward and upward, and an inner side portion of the fifth wall surface a5 is bent inward and upward. A wing is provided which extends inward along the lower sidewall 43b, and a support wall is provided which is connected between the lower sidewall 43b and the fourth wall surface a4, dividing the fan-shaped cavity into two chambers of substantially the same size.

### X. Cross Section of Front Upper Crossmember 21

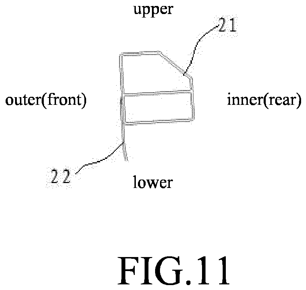

Reference is made to FIG. 11, and FIG. 11 is a schematic cross-sectional view of the front upper crossmember in the specific embodiment.

As shown in FIG. 11, the front module 2 comprises the front upper crossmember 21 having an upper sidewall, a lower sidewall, a front sidewall and a rear sidewall, an upper side portion of the rear sidewall being inclined forward so that the four sidewalls together define a space having an enclosed square cross section with a corner of the square at its upper rear side is chamfered. There is also a support wall provided between the front sidewall and a lower side portion of the rear sidewall. As shown in FIG. 11, the front panel 22 of the front module 2 is connected to the front sidewall of the front upper crossmember 21.

Providing the connecting structures between the modules and the cross-sectional shape of the key components as above, the formed upper vehicle body possesses higher strength and rigidity.

An upper vehicle body for an MPV or VAN provided by the present invention has been described in detail as above. The principles and embodiments of the present invention are described with reference to a specific example, and the description of the above example is provided only to facilitate the understanding of the method and core idea of the present invention. It should be noted for those skilled in the art that various modifications and changes can be made to the present invention without departing from the scope of the invention, as defined in the claims.

## Claims

1. An upper vehicle body for an MPV or VAN, comprising: a front end module (1), a front module (2), two front quarter modules (3) spaced apart from each other in a left-right direction, two rear quarter modules (4) spaced apart from each other in the left-right direction, a front windshield upper crossmember module (5), a front top crossmember module (6), a support crossmember module (7), a rear top crossmember module (8), and a back module (9), and are shaped separately and independently; **characterised in that**:
all of the modules are formed by aluminum alloy stamped sheets and aluminum alloy extruded profiles with cavities in combination; the front end module (1) is screwed to the front quarter modules (3), the front module (2) is riveted and welded to the front quarter modules (3), the front quarter modules (3) are MIG welded to the rear quarter modules (4), the front windshield upper crossmember module (5) is screwed to the front quarter modules (3), the front top crossmember module (6) is screwed to the front quarter modules (3) and to the rear quarter modules (4), the support crossmember module (7) is screwed to the front quarter modules (3) and to the rear quarter modules (4), the rear top crossmember module (8) is screwed to the rear quarter module (4), and the back module (9) is glued to the rear quarter modules (4) with structural glue and riveted to the rear quarter modules (4).

2. The upper vehicle body according to claim 1, **characterized in that** the front end module (1) is provided at its rear side with two first connecting sills (11) which are spaced apart from each other in the left-right direction, the first connecting sill (11) being an aluminum alloy extruded profile with a cavity; the front quarter module (3) is provided at its front side with a second connecting sill (31), the second connecting sill (31) being an aluminum alloy extruded profile with a cavity; and a sidewall of the first connecting sill (11) is screwed to a sidewall of the corresponding second connecting sill (31).

3. The upper vehicle body according to claim 1, **characterized in that** the front module (2) comprises a front panel (22), a side panel (23) and an angular connecting plate (24) which are all aluminum alloy stamped sheets; and the front quarter module (3) comprises an A-pillar (32), a front quarter lower sill (37), and a connecting sill (36) connecting a lower end of the A-pillar (32) and a front end of the front quarter lower sill (37), wherein the A-pillar (32) comprises an A-pillar main sill (321), and both a main body of the connecting sill (36) and the A-pillar main sill (321) are aluminum alloy extruded profiles with cavities;
wherein the side panel (23) is connected at its front side to a left or right side of the front panel (22), and welded at its rear side to a sidewall of the corresponding A-pillar main sill (321); and the angular connecting plate (24) has a plate surface which is connected to the left or right side of the front panel (22) and another plate surface which is riveted to a sidewall of the main body of the corresponding connecting sill (36).

4. The upper vehicle body according to claim 1, **characterized in that** the front quarter module (3) comprises a B-pillar (33), and the B-pillar (33) comprises a B-pillar main sill (331), wherein the B-pillar main sill (331) is an aluminum alloy extruded profile with a cavity, and has a front sidewall, a rear sidewall, an inner sidewall and an outer sidewall, which four sidewalls together defining the enclosed cavity, and a support wall is further provided which is connected between the front sidewall and the rear sidewall;
wherein the rear quarter module (4) comprises a rear quarter front sill (41), and the rear quarter front sill (41) is an aluminum alloy extruded profile with a cavity and has a front sidewall, a rear sidewall, an inner sidewall and an outer sidewall, which four sidewalls together defining the enclosed cavity; and
wherein the front sidewall of the rear quarter front sill (41) is fitted to the rear sidewall of the B-pillar main sill (331), a joint of the front sidewall and the inner sidewall of the rear quarter front sill (41) is MIG welded to the rear sidewall of the B-pillar main sill (331), and a joint of the rear sidewall and the outer sidewall of the B-pillar main sill (331) is MIG welded to the front sidewall of the rear quarter front sill (41).

5. The upper vehicle body according to claim 4, **characterized in that** the B-pillar (33) further comprises a B-pillar front sill (332) disposed in front of the B-pillar main sill (331); the B-pillar front sill (332) is an aluminum alloy extruded profile with a cavity, and has a front sidewall, a rear sidewall, an inner sidewall and an outer sidewall which four sidewalls together defining the enclosed cavity, and the B-pillar front sill (332) further comprises a wing extending forward along the outer sidewall;
wherein the B-pillar (33) further comprises a B-pillar outer panel (333) and a B-pillar inner panel (334), both of which are aluminum alloy stamped sheets; the B-pillar outer panel (333) is an angular plate, and comprises a plate surface which is welded to the outer sidewall of the B-pillar front sill (332) and another plate surface which is welded to the front sidewall of the B-pillar main sill (331); and the B-pillar inner panel (334) is welded at its front side to the inner sidewall of the B-pillar front sill (332), and welded at its rear side to the inner sidewall of the B-pillar main sill (331);
wherein an upper end of the B-pillar (33) is bent inward to form a joint (35); the rear quarter module (4) comprises a rear quarter upper sill (43); and the front top crossmember module (6) comprises a front crossbeam (61) and two first support sills (62), two ends of the front crossbeam (61) being screwed to the corresponding joints (35), respectively, and the first support sill (62) being welded at one end to one end of the front crossbeam (61) and screwed at the other end to a front end of the corresponding rear quarter upper sill (43); and
wherein the rear quarter module (4) comprises a rear quarter rear sill (42); and the rear top crossmember module (8) comprises a rear crossbeam (81) and two second support sills (82), two ends of the rear crossbeam (81) being screwed to rear ends of the corresponding rear quarter upper sills (43), respectively, and the second support sill (82) being welded at one end to one end of the rear crossbeam (81) and screwed at the other end to an upper end of the corresponding rear quarter rear sill (42).

6. The upper vehicle body according to claim 5, **characterized in that** the rear quarter rear sill (42) has a front sidewall, a rear sidewall, an inner sidewall and an outer sidewall, which four sidewalls together defining the enclosed cavity, and the rear quarter rear sill further comprises a first wing (421) extending inward along the rear sidewall and a second wing (422) extending rearward along the outer sidewall;
wherein the back module (9) comprises two D-pillars (91) which are spaced apart from each other in the left-right direction, the D-pillar (91) comprises a D-pillar outer angular plate (911), and the D-pillar outer angular plate (911) is an aluminum alloy stamped sheet, and comprises a plate surface which is glued and riveted to the rear sidewall of the rear quarter rear sill (42) and the first wing (421);
wherein the D-pillar (91) further comprises a D-pillar main sill (912); and the D-pillar main sill (912) is an aluminum alloy extruded profile with a cavity, and has a front sidewall, a rear sidewall, an inner sidewall and an outer sidewall, which four sidewalls together defining the enclosed cavity, an inner side portion of the front sidewall being bent rearward; and
wherein the D-pillar (91) further comprises a D-pillar inner angular plate (913), and the D-pillar inner angular plate (913) is an aluminum alloy stamped sheet, and comprises a plate surface which is welded to the front sidewall at its inner side and another plate surface which is welded to another plate surface of the D-pillar outer angular plate (911).

7. The upper vehicle body according to any one of claims 1-6, **characterized in that** the front quarter module (3) comprises an A-pillar top side sill (34), and the A-pillar top side sill (34) comprises a top side sill main body (341); the top side sill main body (341) is an aluminum alloy extruded profile with a cavity, and has a first sidewall (341a) of the top side sill and a second sidewall (341b) of the top side sill that cooperate with an outer trim panel of the A-pillar, a third sidewall (341c) of the top side sill that cooperates with a front windshield, a fourth sidewall (341d) of the top side sill that cooperates with an inner trim plate of the A-pillar, and a fifth sidewall (341e) of the top side sill and a sixth sidewall (341f) of the top side sill which cooperate with a stop BRLINE, the six sidewalls together defining the enclosed cavity; there is also an upper side sill wing provided at a joint of the second sidewall (341b) of the top side sill and the third sidewall (341c) of the top side sill; and there is also a Y-shaped support wall, three wall surfaces of the Y-shaped support wall being connected with the third sidewall (341c) of the top side sill, the fifth sidewall (341e) of the top side sill and the sixth sidewall (341f) of the top side sill;
wherein the A-pillar top side sill (34) further comprises a first angular plate (342) of the upper sill and a second angular plate (343) of the upper sill, both of which are aluminum alloy stamped sheets; the first angular plate (342) of the upper sill comprises a plate surface which is welded to the fifth sidewall (341e) of the top side sill, the second angular plate (343) of the upper sill comprises a plate surface which is welded to the sixth sidewall (341f) of the top side sill, and another plate surface of the first angular plate of the upper sill and another plate surface of the second angular plate of the upper sill are welded together.

8. The upper vehicle body according to any one of claims 1-6, **characterized in that** the front windshield upper crossmember module (5) is an aluminum alloy extruded profile with a cavity, and has an upper sidewall (5a), a lower sidewall (5b), an inner sidewall (5c) and an outer sidewall (5d), which four sidewalls together defining the enclosed cavity, wherein the upper sidewall (5a) is formed with, in sequence along an inner-outer direction, a first wall surface (a1) that cooperates with a front top light and a second wall surface (a2) that cooperates with an outer panel of a front top cover, an outer side portion of the first wall surface (a1) being bent outward and upward, wherein there is also a support wall connected between the lower sidewall (5b) and the bending position of the first wall surface (a1), and wherein there is also a wing connected to the outer sidewall (5d).

9. The upper vehicle body according to any one of claims 5-6, **characterized in that** the rear quarter upper sill (43) is an aluminum alloy extruded profile with a cavity, and has an upper sidewall (43a), a lower sidewall (43b), an inner sidewall (43d) and an outer sidewall (43c), which four sidewalls together defining an enclosed cavity, wherein the upper sidewall (43a) is formed with, in sequence along the inner-outer direction, a third wall surface (a3) that cooperates with an outer panel of a rear top cover, a fourth wall surface (a4) that cooperates with a CAS molding surface, and a fifth wall surface (a5) that cooperates with the rear quarter outer panel, an outer side portion of the third wall surface (a3) being bent outward and upward and an inner side portion of the fifth wall surface (a5) being bent inward and upward, wherein a wing is provided which extends inward along the lower sidewall (43b), and wherein a support wall is provided which is connected between the lower sidewall (43b) and the fourth wall surface (a4).

10. The upper vehicle body according to any one of claims 1-6, **characterized in that** the front module (2) comprises a front upper crossmember (21), and the front upper crossmember (21) has an upper sidewall, a lower sidewall, a front sidewall and a rear sidewall, which four sidewalls together defining an enclosed cavity, an upper side portion of the rear sidewall being bent forward, wherein there is also a support wall provided between the front sidewall and a lower side portion of the rear sidewall.

## Patentansprüche

1. Obere Fahrzeugkarosserie für ein MPV oder einen VAN, umfassend: ein vorderes Endmodul (1), ein vorderes Modul (2), zwei Module (3) des vorderen Viertels, die voneinander in einer Links-Rechts-Richtung beabstandet sind, zwei Module (4) des hinteren Viertels, die voneinander in der Links-Rechts-Richtung beabstandet sind, ein oberes Querelementmodul (5) der vorderen Windschutzscheibe, ein vorderes oberes Querelementmodul (6), ein Stützquerelementmodul (7), ein hinteres oberes Querelementmodul (8) und ein hinteres Modul (9), und die separat und unabhängig geformt sind; **dadurch gekennzeichnet, dass**:
alle der Module durch geprägte Blechen aus Aluminiumlegierung und extrudierte Profile aus Aluminiumlegierung mit Hohlräumen in Kombination gebildet sind; das vordere Endmodul (1) an die Module (3) des vorderen Viertels geschraubt ist, das vordere Modul (2) an die Module (3) des vorderen Viertels genietet und geschweißt ist, die Module (3) des vorderen Viertels an die Module (4) des hinteren Viertels MIG-geschweißt sind, das obere Querelementmodul (5) der vorderen Windschutzscheibe an die Module (3) des vorderen Viertels geschraubt ist, das vordere obere Querelementmodul (6) an die Module (3) des vorderen Viertels und an die Module (4) des hinteren Viertels geschraubt ist, das Stützquerelementmodul (7) an die Module (3) des vorderen Viertels und an die Module (4) des hinteren Viertels geschraubt ist, das hintere obere Querelementmodul (8) an das Modul (4) des hinteren Viertels geschraubt ist und das hintere Modul (9) mit Strukturkleber an die Module (4) des hinteren Viertels geklebt und an die Module (4) des hinteren Viertels genietet ist.

2. Obere Fahrzeugkarosserie nach Anspruch 1, **dadurch gekennzeichnet, dass** das vordere Endmodul (1) an seiner Rückseite mit zwei ersten Verbindungsschwellen (11) bereitgestellt ist, die voneinander in der Links-Rechts-Richtung beabstandet sind, wobei die erste Verbindungsschwelle (11) ein extrudiertes Profil aus Aluminiumlegierung mit einem Hohlraum ist; wobei das Modul (3) des vorderen Viertels an seiner Vorderseite mit einer zweiten Verbindungsschwelle (31) bereitgestellt ist, wobei die zweite Verbindungsschwelle (31) ein extrudiertes Profil aus Aluminiumlegierung mit einem Hohlraum ist; und wobei eine Seitenwand der ersten Verbindungsschwelle (11) an eine Seitenwand der entsprechenden zweiten Verbindungsschwelle (31) geschraubt ist.

3. Obere Fahrzeugkarosserie nach Anspruch 1, **dadurch gekennzeichnet, dass** das vordere Modul (2) eine vordere Platte (22), eine Seitenplatte (23) und eine winkelförmige Verbindungsplatte (24) umfasst, die alle geprägte Bleche aus Aluminiumlegierung sind; und wobei das Modul (3) des vorderen Viertels eine A-Säule (32), eine untere Schwelle (37) des vorderen Viertels und eine Verbindungsschwelle (36) umfasst, die ein unteres Ende der A-Säule (32) und ein vorderes Ende der unteren Schwelle (37) des vorderen Viertels verbindet, wobei die A-Säule (32) eine A-Säulen-Hauptschwelle (321) umfasst, und sowohl ein Hauptkörper der Verbindungsschwelle (36) als auch der A-Säulen-Hauptschwelle (321) extrudierte Profile aus Aluminiumlegierung mit Hohlräumen sind;
wobei die Seitenplatte (23) an ihrer vorderen Seite mit einer linken oder rechten Seite der vorderen Platte (22) verbunden und an ihrer hinteren Seite an eine Seitenwand der entsprechenden A-Säulen-Hauptschwelle (321) geschweißt ist; und die winkelförmige Verbindungsplatte (24) eine Plattenoberfläche, die mit der linken oder rechten Seite der vorderen Platte (22) verbunden ist, und eine weitere Plattenoberfläche aufweist, die an eine Seitenwand des Hauptkörpers der entsprechenden Verbindungsschwelle (36) genietet ist.

4. Obere Fahrzeugkarosserie nach Anspruch 1, **dadurch gekennzeichnet, dass** das Modul (3) des vorderen Viertels eine B-Säule (33) umfasst, und die B-Säule (33) eine B-Säulen-Hauptschwelle (331) umfasst, wobei die B-Säulen-Hauptschwelle (331) ein extrudiertes Profil aus Aluminiumlegierung mit einem Hohlraum ist, und eine vordere Seitenwand, eine hintere Seitenwand, eine innere Seitenwand und eine äußere Seitenwand aufweist, wobei die vier Seitenwände zusammen den eingeschlossenen Hohlraum definieren, und ferner eine Stützwand bereitgestellt ist, die zwischen der vorderen Seitenwand und der hinteren Seitenwand verbunden ist;
wobei das Modul (4) des hinteren Viertels eine vordere Schwelle (41) des hinteren Viertels umfasst und die vordere Schwelle (41) des hinteren Viertels ein extrudiertes Profil aus Aluminiumlegierung mit einem Hohlraum ist und eine vordere Seitenwand, eine hintere Seitenwand, eine innere Seitenwand und eine äußere Seitenwand aufweist, wobei die vier Seitenwände zusammen den eingeschlossenen Hohlraum definieren; und
wobei die vordere Seitenwand der vorderen Schwelle (41) des hinteren Viertels an der hinteren Seitenwand der B-Säulen-Hauptschwelle (331) angebracht ist, eine Verbindung der vorderen Seitenwand und der inneren Seitenwand der vorderen Schwelle (41) des hinteren Viertels an die hintere Seitenwand der B-Säulen-Hauptschwelle (331) MIG-geschweißt ist, und eine Verbindung der hinteren Seitenwand und der äußeren Seitenwand der B-Säulen-Hauptschwelle (331) an die vordere Seitenwand der vorderen Schwelle (41) des hinteren Viertels MIG-geschweißt ist.

5. Obere Fahrzeugkarosserie nach Anspruch 4, **dadurch gekennzeichnet, dass** die B-Säule (33) ferner eine vordere B-Säulen-Schwelle (332) umfasst, die vor der B-Säulen-Hauptschwelle (331) angeordnet ist; wobei die vordere B-Säulen-Schwelle (332) ein extrudiertes Profil aus Aluminiumlegierung mit einem Hohlraum ist und eine vordere Seitenwand, eine hintere Seitenwand, eine innere Seitenwand und eine äußere Seitenwand aufweist, wobei die vier Seitenwände zusammen den eingeschlossenen Hohlraum definieren, und die vordere B-Säulen-Schwelle (332) ferner einen Flügel umfasst, der sich entlang der äußeren Seitenwand nach vorne erstreckt;
wobei die B-Säule (33) ferner eine B-Säulen-Außenplatte (333) und eine B-Säulen-Innenplatte (334) umfasst, wobei beide geprägte Bleche aus Aluminiumlegierung sind; wobei die B-Säulen-Außenplatte (333) eine winkelförmige Platte ist und eine Plattenoberfläche, die an die äußere Seitenwand der vorderen B-Säulen-Schwelle (332) geschweißt ist, und eine weitere Plattenoberfläche umfasst, die an die vordere Seitenwand der B-Säulen-Hauptschwelle (331) geschweißt ist; und wobei die B-Säulen-Innenplatte (334) an ihrer vorderen Seite an die innere Seitenwand der vorderen B-Säulen-Schwelle (332) geschweißt ist und an ihrer hinteren Seite an die innere Seitenwand der B-Säulen-Hauptschwelle (331) geschweißt ist;
wobei ein oberes Ende der B-Säule (33) nach innen gebogen ist, um eine Verbindung (35) zu bilden; wobei das Modul (4) des hinteren Viertels eine obere Schwelle (43) des hinteren Viertels umfasst; und wobei das vordere obere Querelementmodul (6) einen vorderen Querbalken (61) und zwei erste Stützschwellen (62) umfasst, wobei zwei Enden des vorderen Querbalkens (61) jeweils an die entsprechenden Verbindungen (35) geschraubt sind und die erste Stützschwelle (62) an einem Ende an ein Ende des vorderen Querbalkens (61) geschweißt ist und an dem anderen Ende an ein vorderes Ende der entsprechenden oberen Schwelle (43) des hinteren Viertels geschweißt ist; und
wobei das Modul (4) des hinteren Viertels eine hintere Schwelle (42) des hinteren Viertels umfasst; und das hintere obere Querelementmodul (8) einen hinteren Querbalken (81) und zwei zweite Stützschwellen (82) umfasst, wobei zwei Enden des hinteren Querbalkens (81) jeweils an hintere Enden der entsprechenden oberen Schwellen (43) des hinteren Viertels geschraubt sind und die zweite Stützschwelle (82) an einem Ende an ein Ende des hinteren Querbalkens (81) geschweißt ist und an dem anderen Ende an ein oberes Ende der entsprechenden hinteren Schwelle (42) des hinteren Viertels geschraubt sind.

6. Obere Fahrzeugkarosserie nach Anspruch 5, **dadurch gekennzeichnet, dass** die hintere Schwelle (42) des hinteren Viertels eine vordere Seitenwand, eine hintere Seitenwand, eine innere Seitenwand und eine äußere Seitenwand aufweist, wobei die vier Seitenwände zusammen den eingeschlossenen Hohlraum definieren, und die hintere Schwelle des hinteren Viertels ferner einen ersten Flügel (421), der sich nach innen entlang der hinteren Seitenwand erstreckt, und einen zweiten Flügel (422) umfasst, der sich nach hinten entlang der äußeren Seitenwand erstreckt;
wobei das hintere Modul (9) zwei D-Säulen (91) umfasst, die voneinander in der Links-Rechts-Richtung beabstandet sind, wobei die D-Säule (91) eine äußere Winkelplatte (911) der D-Säule umfasst, und die äußere Winkelplatte (911) der D-Säule ein geprägtes Blech aus Aluminiumlegierung ist und eine Plattenoberfläche umfasst, die an die hintere Seitenwand der hinteren Schwelle (42) des hinteren Viertels und den ersten Flügel (421) geklebt und genietet ist;
wobei die D-Säule (91) ferner eine D-Säulen-Hauptschwelle (912) umfasst, und die D-Säulen-Hauptschwelle (912) ein extrudiertes Profil aus Aluminiumlegierung mit einem Hohlraum ist und eine vordere Seitenwand, eine hintere Seitenwand, eine innere Seitenwand und eine äußere Seitenwand aufweist, wobei die vier Seitenwände zusammen den eingeschlossenen Hohlraum definieren, wobei ein innerer Seitenabschnitt der vorderen Seitenwand nach hinten gebogen ist; und
wobei die D-Säule (91) ferner eine innere Winkelplatte (913) der D-Säule umfasst und die innere Winkelplatte (913) der D-Säule ein geprägtes Blech aus Aluminiumlegierung ist und eine Plattenoberfläche, die an die vordere Seitenwand in ihrer Innenseite geschweißt ist und eine weitere Plattenoberfläche umfasst, die an eine weitere Plattenoberfläche der äußeren Winkelplatte (911) der D-Säule geschweißt ist.

7. Obere Fahrzeugkarosserie nach einem der Ansprüche 1-6, **dadurch gekennzeichnet, dass** das Modul (3) des vorderen Viertels eine obere Seitenschwelle (34) der A-Säule umfasst, und die obere Seitenschwelle (34) der A-Säule einen oberen seitlichen Schwellenhauptkörper (341) umfasst, wobei der obere seitliche Schwellenhauptkörper (341) ein extrudiertes Profil aus Aluminiumlegierung mit einem Hohlraum ist und eine erste Seitenwand (341a) der oberen seitlichen Schwelle und eine zweite Seitenwand (341b) der oberen seitlichen Schwelle aufweist, die mit einer äußeren Verkleidungsplatte der A-Säule kooperieren, eine dritte Seitenwand (341c) der oberen seitlichen Schwelle, die mit einer vorderen Windschutzscheibe kooperiert, eine vierte Seitenwand (341d) der oberen seitlichen Schwelle, die mit einer inneren Verkleidungsplatte der A-Säule kooperiert, und eine fünfte Seitenwand (341e) der oberen seitlichen Schwelle und eine sechste Seitenwand (341f) der oberen seitlichen Schwelle, die mit einem Anschlag BRLINE kooperieren, wobei die sechs Seitenwände zusammen den eingeschlossenen Hohlraum definieren; wobei es auch einen oberen seitlichen Schwellenflügel gibt, der an einer Verbindung der zweiten Seitenwand (341b) der oberen seitlichen Schwelle und der dritten Seitenwand (341c) der oberen seitlichen Schwelle bereitgestellt ist; und wobei es auch eine Y-förmige Stützwand gibt, wobei drei Wandoberflächen der Y-förmigen Stützwand mit der dritten Seitenwand (341c) der oberen seitlichen Schwelle, der fünften Seitenwand (341e) der oberen seitlichen Schwelle und der sechsten Seitenwand (341f) der oberen seitlichen Schwelle verbunden sind;
wobei die obere seitliche Schwelle (34) der A-Säule ferner eine erste Winkelplatte (342) der oberen Schwelle und eine zweite Winkelplatte (343) der oberen Schwelle umfasst, wobei beide davon geprägte Bleche aus Aluminiumlegierung sind; wobei die erste Winkelplatte (342) der oberen Schwelle eine Plattenoberfläche umfasst, die an die fünfte Seitenwand (341e) der oberen seitlichen Schwelle geschweißt ist, die zweite Winkelplatte (343) der oberen Schwelle eine Plattenoberfläche umfasst, die an die sechste Seitenwand (341f) der oberen seitlichen Schwelle geschweißt ist, und eine weitere Plattenoberfläche der ersten Winkelplatte der oberen Schwelle und eine weitere Plattenoberfläche der zweiten Winkelplatte der oberen Schwelle aneinander geschweißt sind.

8. Obere Fahrzeugkarosserie nach einem der Ansprüche 1-6, **dadurch gekennzeichnet, dass** das obere Querelementmodul (5) der vorderen Windschutzscheibe ein extrudiertes Profil aus Aluminiumlegierung mit einem Hohlraum ist und eine obere Seitenwand (5a), eine untere Seitenwand (5b), eine innere Seitenwand (5c) und eine äußere Seitenwand (5d) aufweist, wobei die vier Seitenwände zusammen den eingeschlossenen Hohlraum definieren, wobei die obere Seitenwand (5a) in Abfolge entlang einer Richtung von innen nach außen mit einer ersten Wandoberfläche (a1), die mit einem vorderen oberen Licht kooperiert, und einer zweiten Wandoberfläche (a2) gebildet ist, die mit einer Außenplatte einer vorderen oberen Abdeckung kooperiert, wobei ein äußerer seitlicher Abschnitt der ersten Wandoberfläche (a1) nach außen und nach oben gebogen ist, wobei es auch eine Stützwand gibt, die zwischen der unteren Seitenwand (5b) und der Biegeposition der ersten Wandoberfläche (a1) verbunden ist, und wobei es auch einen Flügel gibt, der mit der äußeren Seitenwand (5d) verbunden ist.

9. Obere Fahrzeugkarosserie nach einem der Ansprüche 5-6, **dadurch gekennzeichnet, dass** die obere Schwelle (43) des hinteren Viertels ein extrudiertes Profil aus Aluminiumlegierung mit einem Hohlraum ist und eine obere Seitenwand (43a), eine untere Seitenwand (43b), eine innere Seitenwand (43d) und eine äußere Seitenwand (43c) aufweist, wobei die vier Seitenwände zusammen einen eingeschlossenen Hohlraum definieren, wobei die obere Seitenwand (43a) in Abfolge entlang der Richtung von innen nach außen mit einer dritten Wandoberfläche (a3), die mit einer äußeren Platte einer hinteren oberen Abdeckung kooperiert, einer vierten Wandoberfläche (a4), die mit einer CAS-Formfläche kooperiert, und einer fünften Wandoberfläche (a5) gebildet ist, die mit der äußeren Platte des hinteren Viertels kooperiert, wobei ein äußerer Seitenabschnitt der dritten Wandoberfläche (a3) nach außen und nach oben gebogen ist und ein innerer Seitenabschnitt der fünften Wandoberfläche (a5) nach innen und nach oben gebogen ist, wobei ein Flügel bereitgestellt ist, der sich nach innen entlang einer unteren Seitenwand (43b) erstreckt, und wobei eine Stützwand bereitgestellt ist, die zwischen der unteren Seitenwand (43b) und der vierten Wandoberfläche (a4) verbunden ist.

10. Obere Fahrzeugkarosserie nach einem der Ansprüche 1-6, **dadurch gekennzeichnet, dass** das vordere Modul (2) ein vorderes oberes Querelement (21) umfasst und das vordere obere Querelement (21) eine obere Seitenwand, eine untere Seitenwand, eine vordere Seitenwand und eine hintere Seitenwand aufweist, wobei die vier Seitenwände zusammen einen eingeschlossenen Hohlraum definieren, wobei ein oberer Seitenabschnitt der hinteren Seitenwand nach vorne gebogen ist, wobei es auch eine Stützwand gibt, die zwischen der vorderen Seitenwand und einem unteren Seitenabschnitt der hinteren Seitenwand bereitgestellt ist.

## Revendications

1. Caisse supérieure de véhicule pour un monospace, MPV, ou un VAN, comprenant : un module d'extrémité avant (1), un module avant (2), deux modules de custode avant (3) espacés l'un de l'autre dans une direction gauche-droite, deux modules de custode arrière (4) espacés l'un de l'autre dans la direction gauche-droite, un module de traverse supérieure de pare-brise avant (5), un module de traverse supérieure avant (6), un module de traverse de support (7), un module de traverse supérieure arrière (8), et un module arrière (9), et sont formés séparément et indépendamment ; **caractérisé en ce que** :
tous les modules sont formés par des tôles embouties en alliage d'aluminium et des profilés extrudés en alliage d'aluminium avec des cavités en combinaison ; le module d'extrémité avant (1) est vissé aux modules de custode avant (3), le module avant (2) est riveté et soudé aux modules de custode avant (3), les modules de custode avant (3) sont soudés MIG aux modules de custode arrière (4), le module de traverse supérieure de pare-brise avant (5) est vissé aux modules de custode avant (3), le module de traverse supérieure avant (6) est vissé aux modules de custode avant (3) et aux modules de custode arrière (4), le module de traverse de support (7) est vissé aux modules de custode avant (3) et aux modules de custode arrière (4), le module de traverse supérieure arrière (8) est vissé au module de custode arrière (4), et le module arrière (9) est collé aux modules de custode arrière (4) avec de la colle structurelle et riveté aux modules de custode arrière (4).

2. Caisse supérieure de véhicule selon la revendication 1, **caractérisée en ce que** le module d'extrémité avant (1) est pourvu sur sa face arrière de deux premiers seuils de raccordement (11) qui sont espacés l'un de l'autre dans la direction gauche-droite, le premier seuil de raccordement (11) étant un profilé extrudé en alliage d'aluminium avec une cavité ; le module de custode avant (3) est pourvu sur sa face avant d'un deuxième seuil de raccordement (31), le deuxième seuil de raccordement (31) étant un profilé extrudé en alliage d'aluminium avec une cavité ; et une paroi latérale du premier seuil de raccordement (11) est vissée à une paroi latérale du deuxième seuil de raccordement correspondant (31).

3. Caisse supérieure de véhicule selon la revendication 1, **caractérisée en ce que** le module avant (2) comprend un panneau avant (22), un panneau latéral (23) et une plaque de raccordement angulaire (24) qui sont tous des tôles embouties en alliage d'aluminium ; et le module de custode avant (3) comprend un montant A (32), un seuil inférieur de custode avant (37) et un seuil de raccordement (36) raccordant une extrémité inférieure du montant A (32) et une extrémité avant du seuil inférieur de custode avant (37), dans laquelle le montant A (32) comprend un seuil principal de montant A (321), et le corps principal du seuil de raccordement (36) et le seuil principal de montant A (321) sont tous les deux des profilés extrudés en alliage d'aluminium avec des cavités ;
dans laquelle le panneau latéral (23) est raccordé au niveau de son côté avant à un côté gauche ou droit du panneau avant (22), et soudé au niveau de son côté arrière à une paroi latérale du seuil principal de montant A correspondant (321) ; et la plaque de raccordement angulaire (24) a une surface de plaque qui est raccordée au côté gauche ou droit du panneau avant (22) et une autre surface de plaque qui est rivetée à une paroi latérale du corps principal du seuil de raccordement correspondant (36).

4. Caisse supérieure de véhicule selon la revendication 1, **caractérisée en ce que** le module de custode avant (3) comprend un montant B (33), et le montant B (33) comprend un seuil principal de montant B (331), dans laquelle le seuil principal de montant B (331) est un profilé extrudé en alliage d'aluminium avec une cavité, et a une paroi latérale avant, une paroi latérale arrière, une paroi latérale intérieure et une paroi latérale extérieure, lesquelles quatre parois latérales définissent conjointement la cavité fermée, et une paroi de support est en outre prévue laquelle est raccordée entre la paroi latérale avant et la paroi latérale arrière ;
dans laquelle le module de custode arrière (4) comprend un seuil avant de custode arrière (41), et le seuil avant de custode arrière (41) est un profilé extrudé en alliage d'aluminium avec une cavité et a une paroi latérale avant, une paroi latérale arrière, une paroi latérale intérieure et une paroi latérale extérieure, lesquelles quatre parois latérales définissent conjointement la cavité fermée ; et
dans laquelle la paroi latérale avant du seuil avant de custode arrière (41) est assemblée à la paroi latérale arrière du seuil principal de montant B (331), une liaison de la paroi latérale avant et de la paroi latérale intérieure du seuil avant de custode arrière (41) est soudée MIG à la paroi latérale arrière du seuil principal de montant B (331), et une liaison de la paroi latérale arrière et de la paroi latérale extérieure du seuil principal de montant B (331) est soudée MIG à la paroi latérale avant du seuil avant de custode arrière (41).

5. Caisse supérieure de véhicule selon la revendication 4, **caractérisée en ce que** le montant B (33) comprend en outre un seuil avant de montant B (332) disposé face au seuil principal de montant B (331) ; le seuil avant de montant B (332) est un profilé extrudé en alliage d'aluminium avec une cavité, et a une paroi latérale avant, une paroi latérale arrière, une paroi latérale intérieure et une paroi latérale extérieure, lesquelles quatre parois latérales définissent conjointement la cavité fermée, et le seuil avant de montant B (332) comprend en outre une aile s'étendant vers l'avant le long de la paroi latérale extérieure ;
dans laquelle le montant B (33) comprend en outre un panneau extérieur de montant B (333) et un panneau intérieur de montant B (334), tous deux étant des tôles embouties en alliage d'aluminium ; le panneau extérieur de montant B (333) est une plaque angulaire, et comprend une surface de plaque qui est soudée à la paroi latérale extérieure du seuil avant de montant B (332) et une autre surface de plaque qui est soudée à la paroi latérale avant du seuil principal de montant B (331) ; et le panneau intérieur de montant B (334) est soudé au niveau de son côté avant à la paroi latérale intérieure du seuil avant de montant B (332), et soudé au niveau de son côté arrière à la paroi latérale intérieure du seuil principal de montant B (331) ;
dans lequel une extrémité supérieure du montant B (33) est pliée vers l'intérieur pour former une liaison (35) ; le module de custode arrière (4) comprend un seuil supérieur de custode arrière (43) ; et le module de traverse supérieure avant (6) comprend une traverse avant (61) et deux premiers seuils de support (62), deux extrémités de la traverse avant (61) étant respectivement vissées aux liaisons correspondantes (35), et le premier seuil de support (62) étant soudé au niveau d'une extrémité à une extrémité de la traverse avant (61) et vissé au niveau de l'autre extrémité à une extrémité avant du seuil supérieur de custode arrière correspondant (43) ; et
dans laquelle le module de custode arrière (4) comprend un seuil arrière de custode arrière (42) ; et le module de traverse supérieure arrière (8) comprend une traverse arrière (81) et deux deuxièmes seuils de support (82), deux extrémités de la traverse arrière (81) étant vissées aux extrémités arrière des seuils supérieurs de custode arrière correspondants (43), respectivement, et le deuxième seuil de support (82) étant soudé au niveau d'une extrémité à une extrémité de la traverse arrière (81) et vissé au niveau de l'autre extrémité à une extrémité supérieure du seuil arrière de custode arrière correspondant (42).

6. Caisse supérieure de véhicule selon la revendication 5, **caractérisée en ce que** le seuil arrière de custode arrière (42) a une paroi latérale avant, une paroi latérale arrière, une paroi latérale intérieure et une paroi latérale extérieure, lesquelles quatre parois latérales définissent conjointement la cavité fermée, et le seuil arrière de custode arrière comprend en outre une première aile (421) s'étendant vers l'intérieur le long de la paroi latérale arrière et une deuxième aile (422) s'étendant vers l'arrière le long de la paroi latérale extérieure ;
dans laquelle le module arrière (9) comprend deux montants D (91) qui sont espacés l'un de l'autre dans la direction gauche-droite, le montant D (91) comprend une plaque angulaire extérieure de montant D (911), et la plaque angulaire extérieure de montant D (911) est une tôle emboutie en alliage d'aluminium, et comprend une surface de plaque qui est collée et rivetée à la paroi latérale arrière du seuil arrière de custode arrière (42) et à la première aile (421) ;
dans laquelle le montant D (91) comprend en outre un seuil principal de montant D (912) ; et le seuil principal de montant D (912) est un profilé extrudé en alliage d'aluminium avec une cavité, et a une paroi latérale avant, une paroi latérale arrière, une paroi latérale intérieure et une paroi latérale extérieure, lesquelles quatre parois latérales définissent conjointement la cavité fermée, une partie latérale intérieure de la paroi latérale avant étant pliée vers l'arrière ; et
dans laquelle le montant D (91) comprend en outre une plaque angulaire intérieure de montant D (913), et la plaque angulaire intérieure de montant D (913) est une tôle emboutie en alliage d'aluminium, et comprend une surface de plaque qui est soudée à la paroi latérale avant au niveau de son côté intérieur et une autre surface de plaque qui est soudée à une autre surface de plaque de la plaque angulaire extérieure de montant D (911).

7. Caisse supérieure de véhicule selon l'une quelconque des revendications 1 à 6, **caractérisée en ce que** le module de custode avant (3) comprend un seuil latéral supérieur de montant A (34), et le seuil latéral supérieur de montant A (34) comprend un corps principal de seuil latéral supérieur (341) ; le corps principal de seuil latéral supérieur (341) est un profilé extrudé en alliage d'aluminium avec une cavité, et a une première paroi latérale (341a) du seuil latéral supérieur et une deuxième paroi latérale (341b) du seuil latéral supérieur qui coopèrent avec un panneau de garnissage extérieur du montant A, une troisième paroi latérale (341c) du seuil latéral supérieur qui coopère avec un pare-brise avant, une quatrième paroi latérale (341d) du seuil latéral supérieur qui coopère avec une plaque de garnissage intérieur du montant A, et une cinquième paroi latérale (341e) du seuil latéral supérieur et une sixième paroi latérale (341f) du seuil latéral supérieur qui coopèrent avec une butée BRLINE, les six parois latérales définissant conjointement la cavité fermée ; il est également prévu une aile de seuil latéral supérieur au niveau d'une liaison de la deuxième paroi latérale (341b) du seuil latéral supérieur et de la troisième paroi latérale (341c) du seuil latéral supérieur ; et il y a également une paroi de support en forme de Y, trois surfaces de paroi de la paroi de support en forme de Y étant raccordées à la troisième paroi latérale (341c) du seuil latéral supérieur, la cinquième paroi latérale (341e) du seuil latéral supérieur et la sixième paroi latérale (341f) du seuil latéral supérieur ;
dans laquelle le seuil latéral supérieur de montant A (34) comprend en outre une première plaque angulaire (342) du seuil supérieur et une deuxième plaque angulaire (343) du seuil supérieur, toutes deux étant des tôles embouties en alliage d'aluminium ; la première plaque angulaire (342) du seuil supérieur comprend une surface de plaque qui est soudée à la cinquième paroi latérale (341e) du seuil latéral supérieur, la deuxième plaque angulaire (343) du seuil supérieur comprend une surface de plaque qui est soudée à la sixième paroi latérale (341f) du seuil latéral supérieur, et une autre surface de plaque de la première plaque angulaire du seuil supérieur et une autre surface de plaque de la deuxième plaque angulaire du seuil supérieur sont soudées l'une à l'autre.

8. Caisse supérieure de véhicule selon l'une quelconque des revendications 1 à 6, **caractérisée en ce que** le module de traverse supérieure de pare-brise avant (5) est un profilé extrudé en alliage d'aluminium avec une cavité, et a une paroi latérale supérieure (5a), une paroi latérale inférieure (5b), une paroi latérale intérieure (5c) et une paroi latérale extérieure (5d), lesquelles quatre parois latérales définissent conjointement la cavité fermée, dans laquelle la paroi latérale supérieure (5a) est formée avec, en séquence le long d'une direction intérieure-extérieure, une première surface de paroi (a1) qui coopère avec un feu supérieur avant et une deuxième surface de paroi (a2) qui coopère avec un panneau externe d'un capot supérieur avant, une partie latérale externe de la première surface de paroi (a1) étant pliée vers l'extérieur et vers le haut, dans laquelle il y a également une paroi de support raccordée entre la paroi latérale inférieure (5b) et la position de pliage de la première surface de paroi (a1), et dans laquelle il y a également une aile raccordée à la paroi latérale extérieure (5d).

9. Caisse supérieure de véhicule selon l'une quelconque des revendications 5 à 6, **caractérisée en ce que** le seuil supérieur de custode arrière (43) est un profilé extrudé en alliage d'aluminium avec une cavité, et a une paroi latérale supérieure (43a), une paroi latérale inférieure (43b), une paroi latérale intérieure (43d) et une paroi latérale extérieure (43c), lesquelles quatre parois latérales définissent conjointement une cavité fermée, dans laquelle la paroi latérale supérieure (43a) est formée avec, en séquence le long de la direction intérieure-extérieure, une troisième surface de paroi (a3) qui coopère avec un panneau extérieur d'un capot supérieur arrière, une quatrième surface de paroi (a4) qui coopère avec une surface de moulage CAS, et une cinquième surface de paroi (a5) qui coopère avec le panneau extérieur de custode arrière, une partie latérale extérieure de la troisième surface de paroi (a3) étant pliée vers l'extérieur et vers le haut et une partie latérale intérieure de la cinquième surface de paroi (a5) étant pliée vers l'intérieur et vers le haut, dans laquelle une aile est prévue qui s'étend vers l'intérieur le long de la paroi latérale inférieure (43b), et dans laquelle a une paroi de support est prévue qui est raccordée entre la paroi latérale inférieure (43b) et la quatrième surface de paroi (a4).

10. Caisse supérieure de véhicule selon l'une quelconque des revendications 1 à 6, **caractérisée en ce que** le module avant (2) comprend une traverse supérieure avant (21), et la traverse supérieure avant (21) a une paroi latérale supérieure, une paroi latérale inférieure, une paroi latérale avant et une paroi latérale arrière, lesquelles quatre parois latérales définissent conjointement une cavité fermée, une partie latérale supérieure de la paroi latérale arrière étant pliée vers l'avant, dans laquelle est également prévue une paroi de support entre la paroi latérale avant et une partie latérale inférieure de la paroi latérale arrière.
